(19) Europäisches Patentamt
European Patent Office
Office européen des brevets

(11) **EP 2 610 651 A2**

(12) **EUROPEAN PATENT APPLICATION**
published in accordance with Art. 153(4) EPC

(43) Date of publication:
**03.07.2013 Bulletin 2013/27**

(51) Int Cl.:
*G02B 5/08* (2006.01)

(21) Application number: **11819908.2**

(22) Date of filing: **23.08.2011**

(86) International application number:
**PCT/JP2011/068924**

(87) International publication number:
**WO 2012/026445 (01.03.2012 Gazette 2012/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.08.2010 JP 2010190458**

(71) Applicant: **Toray Industries, Inc.**
**Tokyo 103-8666 (JP)**

(72) Inventors:
 • **OGATA, Kazumasa**
  **Otsu-shi**
  **Shiga (JP)**

 • **MAEKAWA, Shigetoshi**
  **Otsu-shi**
  **Shiga (JP)**
 • **OHIRA, Takayuki**
  **4845, Mishima-shi (JP)**
 • **TAKAHASHI, Kozo**
  **Otsu-shi**
  **Shiga (JP)**

(74) Representative: **Webster, Jeremy Mark et al**
 **Mewburn Ellis LLP**
 **33 Gutter Lane**
 **London**
 **EC2V 8AS (GB)**

(54) **PROCESS FOR PRODUCING WHITE LAYERED FILM, AND WHITE LAYERED POLYESTER FILM**

(57) Provided is a process for producing a white film with excellent low glossiness and productivity. Further, by using the white film, a reflecting member for a surface light source with excellent low glossiness is inexpensively provided.

According to the process for producing a white film of the present invention, a white film with low glossiness and good collectability can be produced by an in-line coating application of a coating solution comprising an acrylic binder, a lithium salt, and inorganic particles, followed by stretching in at least one direction and drying to form a coating layer.

EP 2 610 651 A2

**Description**

TECHNICAL FIELD

The present invention relates to improvement of a white film, and more particularly to a white film that is suitable as a reflecting member for a surface light source (reflecting plate and reflector) and is able to have low glossiness, productivity, and reflectance properties.

BACKGROUND ART

In liquid crystal displays which are used frequently in an information displaying device and the like, in order to ensure high luminance, a surface light source called backlight is installed at the back of the display to radiate light. In addition, the backlight needs not only to simply radiate light but also to illuminate the whole screen uniformly. As a method that satisfies this property, there are structures of a surface light source that are called side-light type and direct type. In particular, to a flat display used in a notebook computer and the like, a side-light type backlight, i.e., a backlight that radiates light from the side of a screen is applied.

Generally, this side-light type employs a light guide plate method in which, using as an illumination source a cold cathode fluorescent lamp at an edge of a light guide plate, a light guide plate which uniformly propagates/diffuses light is utilized to illuminate the whole liquid crystal display uniformly. In this method, to make more efficient use of light, a reflector is arranged around the cold cathode fluorescent lamp, and, in addition, a reflecting plate is arranged under the light guide plate in order to reflect the light diffused from the light guide plate efficiently toward the liquid crystal screen. This reduces the loss of the light from the cold cathode fluorescent lamp and provides a function to brighten the liquid crystal screen.

PRIOR ART DOCUMENTS

PATENT DOCUMENTS

Patent Document 1: JP 2004-90523 A

SUMMARY OF THE INVENTION

PROBLEMS TO BE SOLVED BY THE INVENTION

In the case of using the method described in Patent Document 1 mentioned above, when obtaining an unstretched film by solidifying a melt extruded sheet by cooling on a drum, a drum with a roughened surface has been used to provide low glossiness on the film surface. This method suffers from poor productivity due to, for example, the introduction and maintenance of the drum with a roughened surface and is disadvantageous in terms of cost.

It is difficult to obtain a white film with low glossiness at low cost by the prior art described above.

Thus, an object of the present invention is to provide a process for producing a white film with excellent low glossiness and excellent productivity, which could not be achieved by the conventional study described above. Another object is to inexpensively provide a reflecting member for a surface light source with excellent low glossiness by using the white film.

MEANS FOR SOLVING THE PROBLEMS

The present inventors intensively studied to discover that a white film with low glossiness can be produced readily and inexpensively in a stable manner by providing a biaxially-oriented white laminated polyester film having, for example, a coating layer (hereinafter referred to as a resin layer) on at least one surface of the white film, the resin layer having at least five cracks (hereinafter referred to as depressions) with an area of 1 to 20 $\mu$m$^2$ per 900 $\mu$m$^2$ of the resin layer.

Thus, the present invention uses the following means.

1) A biaxially-oriented white laminated polyester film having a resin layer on at least one side of a white polyester film, wherein at least five depressions with an area of 1 to 20 $\mu$m$^2$ are present per 900 $\mu$m$^2$ of film surface area on a resin layer-side surface of the biaxially-oriented white laminated polyester film.

2) The biaxially-oriented white laminated polyester film according to 1), wherein the surface roughness Rz on the resin layer-side of the biaxially-oriented white laminated polyester film is not less than 1.0 μm.

3) The biaxially-oriented white laminated polyester film according to 1) or 2), wherein the resin layer is formed by using an acrylic binder.

4) The biaxially-oriented white laminated polyester film according to any one of 1) to 3), wherein the resin layer contains inorganic particles and (1) to (3) are satisfied:

$$7.1 \leq P \leq 8.5 \quad (1)$$

$$0 \leq R \leq 5 \quad (2)$$

$$R \geq 7.6 - P \quad (3)$$

wherein P is a surface pH of the resin layer, and R is a number density of particles in the resin layer (R) [number/μm$^2$].

5) The biaxially-oriented white laminated polyester film according to 4), excluding the range where the following equations (4) and (5) are simultaneously satisfied:

$$0.3 < R < 0.7 \quad (4)$$

$$7.1 < P < 7.5 \quad (5).$$

6) The biaxially-oriented white laminated polyester film according to any one of 1) to 5), which is stretched at least 2-fold or more.

7) The biaxially-oriented white laminated polyester film according to 3), wherein the acrylic binder comprises a methylol group or a condensation reactant thereof.

8) The biaxially-oriented white laminated polyester film according to any one of 1) to 7), wherein the resin layer contains inorganic particles, the content of the inorganic particles being from 2% by weight to 25% by weight based on the resin layer.

9) The biaxially-oriented white laminated polyester film according to any one of 1) to 8), wherein the resin layer thickness is 30 to 200 nm.

10) The biaxially-oriented white laminated polyester film according to any one of 1) to 9), wherein the glossiness at an incidence angle of 60° is not more than 45%.

11) A process for producing a white laminated film having a resin layer on at least one surface of a white film, the resin layer having 5 to 25 depressions with an area of 1 to 20 μm$^2$ per 900 μm$^2$ of the resin layer, wherein the resin layer is formed by application of a coating solution to at least one surface of the white film, followed by stretching in at least one direction and drying.

12) The process for producing a white laminated film according to 11), wherein the coating solution comprises an acrylic binder, a lithium salt, and inorganic particles.

13) The process for producing a white laminated film according to 11) or 12), wherein the coating solution contains an acrylic binder, the acrylic binder comprising a methylol group or a condensation reactant thereof, and the coating solution having a pH of 9 to 11.2.

14) A white laminated film obtained by the production process according to any one of 11) to 13).

EFFECTS OF THE INVENTION

According to the present invention, a white film with low glossiness can be produced readily and inexpensively in a stable manner, and the present invention is an invention relating to a white film that uniformly and brightly illuminates a liquid crystal screen particularly when the white film is used as a reflecting plate or reflector in a surface light source and that also has excellent scratch resistance. Further, the present invention provides a film that shows little quality change even after recovering a film produced by the present production process, making it into a chip for recycling, and forming into a film again.

BRIEF DESCRIPTION OF THE DRAWINGS

Figure 1 is a scanning electron microscope (SEM) photograph of a resin layer surface;
Figure 2 is a graph showing the relationship between the inorganic particle content in a coating solution and characteristic values (depression density, surface glossiness) of a white laminated film;
Figure 3 is a graph showing the relationship between transverse stretching magnifications and characteristic values (depression density, surface glossiness) of a white laminated film;
Figure 4 is an explanatory view (cross-sectional view) of resin layer thickness and depression depth;
Figure 5 is an explanatory view (plan view) of a surface of a depression;
Figure 6 is an SEM photograph (Example 2) of a resin layer surface;
Figure 7 is an SEM photograph (Example 3) of a resin layer surface;
Figure 8 is an SEM photograph (Example 4) of a resin layer surface; and
Figure 9 is a graph showing the relationship between the pH of a coating solution and the surface pH of a resin layer of a white laminated polyester film.

BEST MODE FOR CARRYING OUT THE INVENTION

(1) White Film

(1.1) Constitution of White Film

The white film used as a substrate film in the present invention is preferably a white polyester film. The white laminated polyester film of the present invention is formed by using a white polyester film and a resin layer provided on at least one side thereof, preferably one surface thereof.

The white film used as a substrate film in the present invention preferably has a degree of whiteness of 50% or more, preferably in the range of 60 to 100%, in terms of reflectance. The degree of whiteness is determined from the following equation by measuring XYZ values which represent tristimulus values of the color of a sample by the reflection method using a spectrophotometer SE-2000 manufactured by NIPPON DENSHOKU INDUSTORIES CO., LTD., which is designed based on Richard S. Hunter's color-difference formula, as described in JIS Z 8722 and Z 8730.

$$\text{Degree of whiteness} = 4 \times 0.847 \times Z - 3 \times Y \ (\%)$$

The white film in the present invention preferably contains air bubbles within the film. By containing air bubbles within the film, a white film having high reflectance properties can be readily produced as mentioned below.

In the present invention, air bubbles contained within the white film may be individual air bubbles or a series of a plurality of air bubbles. Although the shape of air bubbles is not particularly restricted, the cross-sectional shape of air bubbles is preferably a circle or an ellipse expanding in the film surface direction in order to form a number of interfaces in the film thickness direction.

As a method of forming air bubbles, the method in which a mixture containing a principal resin component (A) and an incompatible component (B) with the resin component (A) that constitute the white film is melt extruded, and then stretched in at least one direction to form air bubbles inside, whereby interfaces are formed, is preferred because finer and flatter air bubbles can be formed and good reflective ability and productivity are provided.

This method is a technique for forming flat air bubbles by utilizing the occurrence of separation during the stretching at the interface between the principal resin component (A) and the incompatible component (B) that constitute the white film. Thus, biaxial stretching is more preferably used than uniaxial stretching in order to improve reflective ability by increasing the volume occupied by air bubbles and increasing the number of interfaces per film thickness. In-line coating is performed in the present invention, and it is preferred that after stretching in one direction of the biaxial stretching, a film be coated with a coating solution and then stretched in the other direction.

The thickness of the white film in the present invention is preferably from 30 μm to 500 μm and more preferably from 50 μm to 400 μm. When the thickness is less than 30 μm, sufficient reflectivity cannot be obtained, which is unfavorable. On the other hand, when the thickness is more than 500 μm, the demand for thinner liquid crystal displays cannot be met, which is unfavorable.

In the present invention, the thickness of white film can be in the range mentioned above by controlling the melt extrusion output of the resin from an extruder and the speed of the process of stretching an unstretched sheet. The white film in the present invention may be constituted by either a monolayer film or a laminated film composed of two or more layers. The monolayer film may be a film produced by the production process mentioned below by using one extruder or by using two or more extruders provided with materials of the same composition.

(1.2) Resin Component (A)

As a principal resin component (A) that constitutes the white film, a polyester resin (a) is preferably used.

In the present invention, the polyester resin (a) is a polymer obtained by polycondensation of a diol component and a dicarboxylic acid component, and representative examples of the dicarboxylic acid component include terephthalic acid, isophthalic acid, phthalic acid, 2,6-naphthalene dicarboxylic acid, adipic acid, sebacic acid, and the like. Representative examples of the diol component include ethylene glycol, trimethylene glycol, tetramethylene glycol, cyclohexanedimethanol, and the like. Specific examples of the polyester resin (a) that can be used include polyethylene terephthalate, polyethylene-2,6-naphthalenedicarboxylate (polyethylene naphthalate), polypropylene terephthalate, polybutylene terephthalate, and the like.

Needless to say, these polyesters may be a homopolyester or a copolyester, and as a copolymer component, for example, diol components such as diethylene glycol, neopentyl glycol, polyalkylene glycol, and the like and dicarboxylic acid components such as adipic acid, sebacic acid, phthalic acid, isophthalic acid, 2,6-naphthalene dicarboxylic acid, 5-sodium sulfoisophthalic acid, and the like can be used.

By using the above-mentioned resin as the polyester resin (a), high mechanical strength can be provided when formed into a film while maintaining high uncolorability. More preferably, polyethylene terephthalate and polyethylene naphthalate are preferred because they are inexpensive and have excellent heat resistance.

Further, the polyester resin (a) may be a mixture of a plurality of polyesters, or a copolyester resin may be contained. Preferred examples of the copolyester resin include a copolyester resin in which the principal component of diol components is alicyclic glycol and those in which the dicarboxylic acid components are alicyclic dicarboxylic acid and isophthalic acid. In particular, an amorphous copolyester using cyclohexanedimethanol, one of alicyclic glycols, as a diol component is preferably used in terms of transparency and moldability and in terms of the effect of finely dispersing an incompatible resin mentioned below. In addition, stretchability and film formability can be improved. The percentage of the cyclohexanedimethanol component in diol components is preferably 30 mol% or more.

The reason why transparency and moldability improve when such a copolyester resin is used is probably because the copolyester resin allows interaction between a cyclic aliphatic hydrocarbon moiety in the copolyester resin and a cyclic olefin moiety in a cyclic olefin copolymer resin (b1) mentioned below, which allows fine dispersion in a matrix (which refers to a polyester resin hereinafter), and consequently high reflectivity, high whiteness, and lightweight properties can be achieved.

The content of the copolyester described above is preferably not less than 1% by weight and less than 50% by weight based on all the materials constituting the matrix taken as 100% by weight, more preferably not less than 1.5% by weight and less than 40% by weight, and still more preferably not less than 1.5% by weight and less than 35% by weight. When the content of such copolyester is less than 1% by weight, it can be difficult to finely disperse a thermoplastic resin (B1) mentioned below in the matrix. When the content is more than 50% by weight, heat resistance is reduced, and the matrix can soften when a heat treatment of a film is carried out in order to provide dimensional stability; consequently, air bubbles can decrease or disappear, and, for example, reflectance properties can be reduced. If the heat treatment temperature is lowered in order to maintain the reflectance properties, dimensional stability of the film can be reduced, which is unfavorable. In the white film of the present invention, by controlling the content of the copolyester relative to 100% by weight of all the materials constituting the matrix within the range mentioned above, film formability and mechanical properties can be maintained while fully exerting the dispersion effect of an incompatible component mentioned above, and high reflectance and dimensional stability can be simultaneously achieved. The reflectance in the present invention can be determined by a relative reflectance; using an integrating sphere with an inner surface made of barium sulfate, a spectrophotometer equipped with a 10° inclined spacer, and aluminum oxide as a reference white plate, it can be determined by a reflectance obtained by measuring the reflectances in the wavelength range of 560 nm when light is applied at an incidence angle of 10° and averaging the relative reflectances relative to the reflectance of the reference white plate, which is taken as 100%, by the wavelength of 560 nm.

(1.3) Incompatible Component (B)

In the present invention, the incompatible component (B) is not particularly limited as long as it is incompatible with the polyester resin that serves as a matrix, and a thermoplastic resin and inorganic particles that are incompatible with the matrix are both preferably used. Although the component above may be used alone or in combination of two or more, using as the incompatible component (B) a thermoplastic resin (B1) and inorganic particles (B2) that are incompatible with the matrix in combination is one of the more preferred embodiments of the white laminated film of the present invention.

(1.3.1) Thermoplastic Resin (B1)

Here, in the present invention, when the thermoplastic resin (B1) is used as the incompatible component (B), specific examples thereof that are preferably used include linear, branched, and cyclic polyolefin resins such as polyethylene, polypropylene, polybutene, polymethylpentene, and cyclopentadiene; acrylic resins such as poly(meth)acrylate; polystyrene; fluorine resins; and the like. Such an incompatible resin may be a homopolymer or a copolymer, and, further, two or more incompatible resins may be used in combination. Among them, polyolefins are preferably used because they have excellent transparency and excellent heat resistance. Specifically, polypropylene, polymethylpentene, cycloolefin copolymers, and the like are preferably used.

In the present invention, when the thermoplastic resin (B1) is used as the incompatible component (B), the resin may be either a crystalline resin or an amorphous resin. As the crystalline resin, polymethylpentene is more preferably used from the standpoint of transparency and heat resistance. Here, as the polymethylpentene, preferred are those which comprise in its molecular skeleton preferably 80 mol% or more, more preferably 85 mol% or more, and particularly preferably 90 mol% or more of a divalent organic group derived from 4-methylpentene-1 as a repeating unit. Examples of other repeating units include, for example, ethylene, propylene, butene-1, 3-methylbutene-1, and divalent organic groups derived from $C_6$-$C_{12}$ hydrocarbons other than 4-methylpentene-1. The polymethylpentene may be a homopolymer or a copolymer. Further, a plurality of polymethylpentenes having different composition, melt viscosity, or the like may be used as a mixture, and other olefin resins or other resins may be used in combination.

When the thermoplastic resin (B1) used in the present invention is an amorphous resin, the cyclic olefin copolymer resin (b1) is particularly preferably used. Cyclic olefin copolymer is a copolymer made of at least one cyclic olefin selected from the group consisting of cycloalkene, bicycloalkene, tricycloalkene, and tetracycloalkene and a linear olefin such as ethylene and propylene.

Representative examples of the cyclic olefin in the cyclic olefin copolymer resin (b1) include bicyclo[2,2,1]hept-2-ene, 6-methyl bicyclo[2,2,1]hept-2-ene, 5,6-dimethyl bicyclo[2,2,1]hept-2-ene, 1-methyl bicyclo[2,2,1]hept-2-ene, 6-ethyl bicyclo[2,2,1]hept-2-ene, 6-n-butyl bicyclo[2,2,1]hept-2-ene, 6-i-butyl bicyclo[2,2,1]hept-2-ene, 7-methyl bicyclo [2,2,1]hept-2-ene, tricyclo[4,3,0,1$^{2.5}$]-3-decene, 2-methyl-tricyclo[4,3,0,1$^{2.5}$]-3-decene, 5-methyl-tricyclo[4,3,0,1$^{2.5}$]-3-decene, tricyclo[4,4,0,1$^{2.5}$]-3-decene, 10-methyl-tricyclo[4,4,0,1$^{2.5}$]-3-decene, and the like.

Representative examples of the linear olefin in the cyclic olefin copolymer resin (b1) include ethylene, propylene, 1-butene, 1-pentene, 1-hexene, 1-octene, 1-decene, 1-dodecene, 1-tetradecene, 1-hexadecene, 1-octadecene, and the like.

In the present invention, among those listed above, the cyclic olefin copolymer resin (b1) which is an amorphous resin is particularly preferably used as the thermoplastic resin (B1) because, as mentioned below, it allows finer dispersion due to interaction with alicyclic diol and/or alicyclic dicarboxylic acid contained in the matrix, and, consequently, reflectance properties can be further enhanced.

When the cyclic olefin copolymer resin (b1) is used as the thermoplastic resin (B1) in the present invention, its glass transition temperature Tg is preferably 110°C or higher. Specifically, it is preferably 130°C or higher, more preferably 150°C or higher, and still more preferably 170°C or higher. That is because the Tg in such a range allows finer dispersion in the matrix during kneading, more certain formation of air bubbles in the stretching process, and more reduced disappearance of air bubbles in the heat treatment process.

In the present invention, when the cyclic olefin copolymer resin (b1) is used as the thermoplastic resin (B1), if its glass transition temperature Tg is less than 110°C, the cyclic olefin copolymer resin (b1), a nucleating agent, can change its shape when a heat treatment of a film is carried out in order to provide dimensional stability; consequently, air bubbles formed from the cyclic olefin copolymer resin (b1) as a nucleus can decrease or disappear, and reflectance properties can be reduced. If the heat treatment temperature is lowered in order to maintain the reflectance properties, then dimensional stability of the film can be reduced, which is unfavorable. In the white laminated film of the present invention, when the cyclic olefin copolymer resin (b1) is used as the thermoplastic resin (B1), high reflectance and dimensional stability can be simultaneously achieved if its glass transition temperature Tg is 110°C or higher.

In the present invention, when the cyclic olefin copolymer resin (b1) is used as the thermoplastic resin (B1), the upper limit of its glass transition temperature is preferably 250°C. The glass transition temperature higher than 250°C leads to a higher extrusion temperature during film formation and poor processability, which is unfavorable.

When the cyclic olefin copolymer resin (b1) is used as the thermoplastic resin (B1), to control its glass transition temperature Tg within the above-mentioned range, for example, the content of the cyclic olefin component in the cyclic olefin copolymer is increased, and the content of the linear olefin component such as ethylene is decreased. Specifically, it is preferred that the cyclic olefin component be 60 mol% or more and the content of the linear olefin component such as ethylene be less than 40 mol%. More preferably, the cyclic olefin component is 70 mol% or more, and the content of the linear olefin component such as ethylene is less than 30 mol%; still more preferably, the cyclic olefin component is 80 mol% or more, and the content of the linear olefin component such as ethylene is less than 20 mol%. Particularly preferably, the cyclic olefin component is 90 mol% or more, and the content of the linear olefin component such as ethylene is less than 10 mol%. When the contents are in such ranges, the glass transition temperature Tg of the cyclic olefin copolymer can be increased to the range mentioned above.

When the cyclic olefin copolymer resin (b1) is used as the thermoplastic resin (B1), the linear olefin component is not particularly restricted, and the ethylene component is preferred from the standpoint of reactivity. Further, the cyclic olefin component is also not particularly restricted, and bicyclo[2,2,1]hept-2-ene (norbomene) and derivatives thereof are preferred in terms of productivity, transparency, and higher Tg.

In the present invention, the thermoplastic resin (B1) mentioned above is preferably contained in an amount of 3 to 15% by weight based on the total weight, 100% by weight, of the principal resin component (A) and the incompatible component (B) that constitute the white film. The content is preferably 4 to 10% by weight and more preferably 5 to 10% by weight.

In the present invention, if the content of the thermoplastic resin (B1) is less than 3% by weight based on the total weight of the principal resin component (A) and the incompatible component (B) that constitute the white film taken as 100% by weight, air bubbles are not sufficiently formed within the film, and whiteness and light reflective properties can be poor. On the other hand, when the amount of the thermoplastic resin (B1) is more than 15% by weight, the strength of the film decreases, and breakage during stretching can readily occur. When the content is within such a range, sufficient whiteness, reflectivity, and lightweight properties can be expressed.

(1.3.2) Inorganic Particles (B2)

In the present invention, when the inorganic particles (B2) is used as the incompatible component (B), examples thereof include glass, silica, barium sulfate, titanium oxide, magnesium sulfate, magnesium carbonate, calcium carbonate, talc, and the like.

Here, among these inorganic particles, particularly in terms of overall effects such as air bubble formation, the degree of whiteness, and optical density, the use of titanium oxide, calcium carbonate, and barium sulfate is more preferred, and, in particular, titanium oxide is most preferred.

(1.4) Other Additives

To the white film in the present invention, appropriate additives, for example, heat stabilizers, oxidation stabilizers, UV absorbers, ultraviolet ray stabilizers, organic lubricants, organic fine particles, fillers, nucleating agents, dyes, dispersants, coupling agent, and the like in such an amount that the effects of the present invention will not be impaired may be added as required.

(2) Coating Layer (Resin Layer)

The resin layer in the present invention preferably contains inorganic particles because depressions (cracks) mentioned below can be efficiently formed. The content of the inorganic particles is preferably 2 to 25% by weight based on the resin component that forms the resin layer. When the content of the inorganic particles is not less than 2% by weight, depressions can be efficiently formed, and when it is not more than 25% by weight, glossiness can be kept low, which are preferred.

In the present invention, it is preferable to form the resin layer by application of a coating solution to at least one side, preferably one surface, of the white film, and stretching in at least one direction and drying. When biaxial stretching is performed, it is preferable to apply a coating solution to the film after stretching it in one direction of the biaxial stretching and then stretch the film in the other direction for biaxial orientation. As a method of applying a coating solution, for example, a method such as gravure coating, roll coating, spin coating, reverse coating, bar coating, screen coating, blade coating, air knife coating, dipping, or the like can be used.

For composition of the coating solution, for example, by applying a coating solution containing an acrylic binder, a lithium salt, and inorganic particles and then stretching the resultant in the other direction, depressions can be formed on the resin layer. The mechanism of formation of the depressions, although unclear, is thought to be as follows: depressions start from inorganic particles mentioned below, and interaction between the acrylic binder and the lithium salt inhibit the stretchability, resulting in appropriate depressions.

The component constituting the resin layer in the present invention is not particularly limited as long as it has an adhesion to the white polyester film, which is a base layer, for example, polyester, polycarbonate, epoxy resin, alkyd resin, acrylic resin, urea resin, urethane resin, or the like can be suitably used. Two or more different resins, for example, polyester and urethane resin, polyester and acrylic resin, or urethane resin and acrylic resin may be used in combination. Preferred are polyester, acrylic resin, and urethane resin, and acrylic resin is most preferred in terms of application uniformity. The composition of the coating solution for forming this resin layer may be any composition as long as depressions are formed, and when the resin layer is acrylic resin, a coating solution containing, for example, an acrylic binder, a lithium salt, inorganic particles, and a pH adjuster is preferred because depressions can be formed on the resin layer by applying the coating solution to a film surface during film formation and then stretching the resultant in the other direction.

(2.1) Acrylic Binder

The type of acrylic binder is not particularly limited, and it is preferable to select and use acrylic resin or methacryl resin in order to provide miscibility with a lithium salt, application properties, and further adherence to a receptive layer. Preferred examples of acrylic resins include copolymers selected from methyl methacrylate, ethyl acrylate, n-butyl acrylate, 2-hydroxyethyl acrylate, acrylamide, N-methylolacrylamide, glycidyl methacrylate, acrylic acid, and the like. These are available from DIC Corporation under the trade name WATERSOL and the like. More preferably, those which comprise a methylol group and/or a condensation reactant thereof are preferred. The cross-linking reaction of methylol groups can be controlled by pH, and the control of the cross-linking reaction allows efficient formation of depressions on a resin layer after application. These are available, for example, from NIPPON CARBIDE INDUSTRIES CO., INC. under the trade name Nikasol and SHOWA DENKO K.K. under the trade name Polysol. The content of the acrylic binder is preferably 50 to 88% by weight and more preferably 55 to 85% by weight based on the solid content in a coating solution, and preferably 35 to 88% by weight and more preferably 40 to 85% by weight based on the solid content other than inorganic particles in a coating solution.

(2.2) Lithium Salt

As a coating solution in the present invention, a coating solution that contains a lithium salt and/or a pH adjuster mentioned below is preferred in terms of depression formation. Examples of lithium salts include lithium hydroxide, lithium acetate, lithium sulfonate, lithium styrenesulfonate, lithium chloride, lithium carbonate, lithium, sulfate, and the like; sulfonic acid lithium salts are preferred, and more preferred is lithium styrenesulfonate. The amount thereof is preferably 4 to 40% by weight and more preferably 8 to 35% by weight based on the solid content in a coating solution, and preferably 8 to 25% by weight and more preferably 8 to 20% by weight based on the solid content other than inorganic particles in a coating solution.

(2.3) Inorganic Particles

The coating solution in the present invention may contain inorganic particles. By containing inorganic particles, depressions start from the inorganic particles in the stretching process after application, and depressions can be efficiently formed on the resin layer.
The type of inorganic particles is not particularly limited; for example, silica, alumina, barium sulfate, calcium carbonate, zeolite, kaolin, talc, aluminum hydroxide, aluminum oxide, zinc oxide, zinc sulfide, magnesium silicate, cerium oxide, magnesium oxide, calcium phosphate, mica, mica titanium, clay, calcium fluoride, or a mixture thereof can be used, and silica is preferred. The average particle size of the particles is preferably 50 nm to 500 nm and more preferably 200 to 400 nm. The average particle size described above is an average particle size measured using a Coulter counter (manufactured by Beckman Coulter, Inc., Multisizer II) by dispersing particles in a solvent that does not swell the particles. The shape of particles is not particularly restricted, and it may be spherical or elliptical. For the content of inorganic particles, if it is 0 to 70% by weight based on the solid content other than the inorganic particles in a coating solution, aggregation of the inorganic particles can be kept small and glossiness becomes low enough for practical use, but it is preferably 5 to 25% by weight and more preferably 8 to 23% by weight. When the content is less than 5% by weight, occurrence density of depressions is low and glossiness cannot be reduced, which is unfavorable. When it is more than 25% by weight, particles readily fall off to contaminate a production line, which is unfavorable.
For the content ratio (weight ratio) of the acrylic binder, lithium salt, and inorganic particles described above in a coating solution, from the standpoint of depression occurrence, the acrylic binder is preferably 2 to 9 times and more preferably 2.5 to 7 times the lithium salt, and the acrylic binder is preferably 0.7 to 20 times, more preferably 2 to 17 times, and still more preferably 2.2 to 15 times the inorganic particles. The lithium salt is preferably 0.1 to 6 times, more preferably 0.2 to 6 times, still more preferably 0.3 to 8 times, and most preferably 0.5 to 6 times the inorganic particles.

(2.4) pH Adjuster

In the present invention, depressions can be formed on a resin layer in the stretching process after application by controlling the pH of the resin layer and coating solution. A preferred method for controlling the pH of the coating solution is to use the lithium salt mentioned above or a pH adjuster mentioned below. The pH adjuster in the present invention refers to a compound or a solvent for maintaining the surface pH of the resin layer mentioned below in a desired range. Specific examples thereof include acetic acid, triethylamine, dimethylaminopyridine, polyethyleneimine, sodium hydroxide, and the like. In the present invention, the resin layer cannot follow a stretching motion of a film during the stretching after application to thereby cause depressions, and therefore depressions are formed on the resin layer. By forming depressions on the surface, glossiness, an object of the present invention, can be reduced.

The pH of the coating solution is preferably in the range of 9 to 11.2. When it is from 9 to 11.2, depressions are readily formed, which is preferred in terms of glossiness.

(2.5) Depressions

In the present invention, the depressions (hollows) formed on the resin layer can reduce the gloss. In the present invention, at least five depressions with an area of 1 to 20 $\mu$m$^2$ need to be present per 900 $\mu$m$^2$ of film surface area.

In the present invention, it is presumed that during the stretching after application, starting from inorganic particles, the resin layer cannot follow a stretching motion of a film and depressions are observed. The depression herein refers to a depression that satisfies both of (I) and (II) below.

(I) Being depressed to a depth of 30% or more of resin layer thickness.
(II) The depressed area is 1 to 20 $\mu$m$^2$.

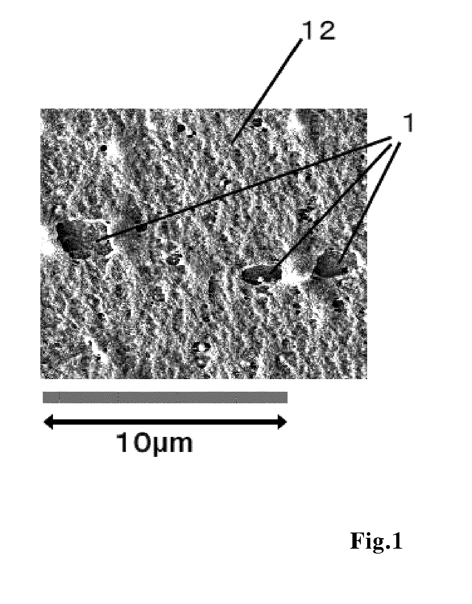

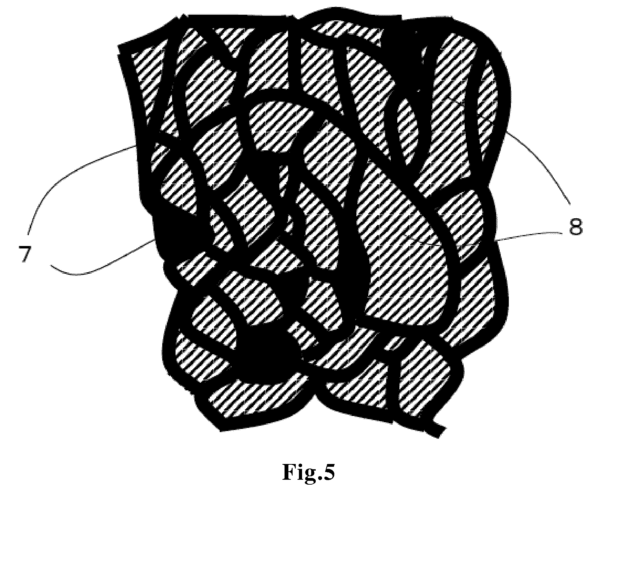

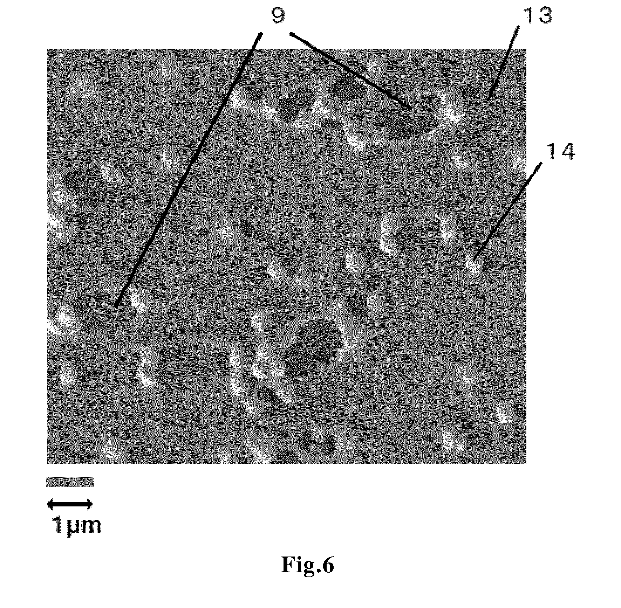

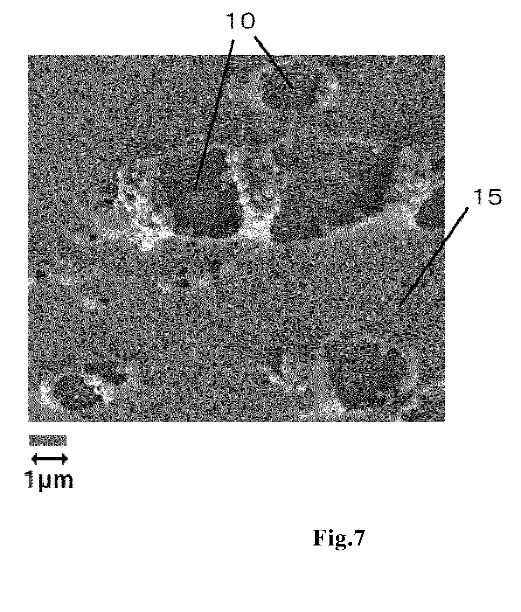

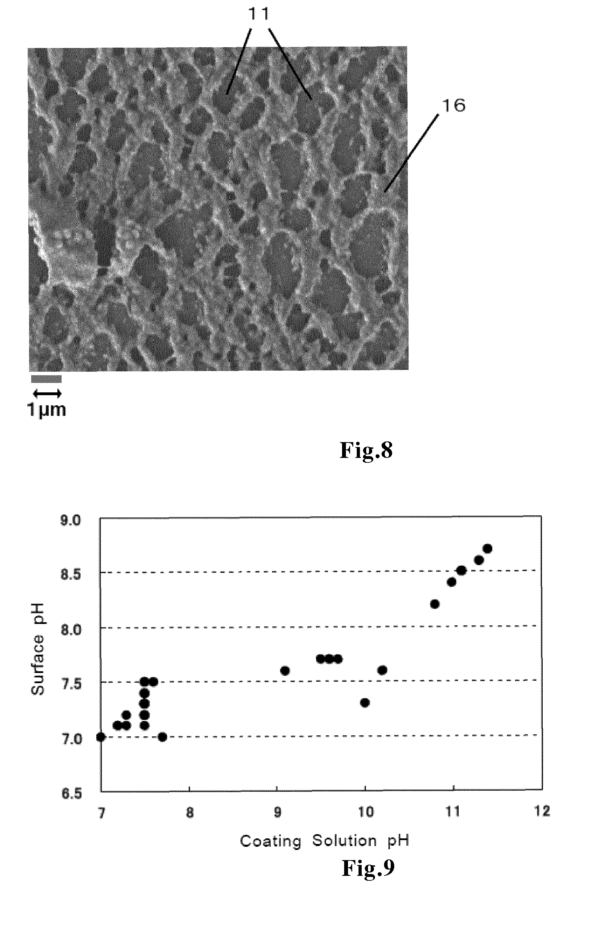

Namely, as shown in Figure 1 and Figure 4 to Figure 8, hollow regions surrounded by salients formed on the resin layer are called depressions.

When the area of depressions is less than 1 $\mu$m$^2$, the effect on the glossiness is small, which is unfavorable. Depressions larger than 20 $\mu$m$^2$ can be due to contaminants or the like and tend to cause uneven appearance, which is unfavorable. For the existing density of depressions (depression density), if it is not less than 5/900 $\mu$m$^2$, preferably not less than 7/900 $\mu$m$^2$, it is good enough for practical use, but it is more preferably 5 to 25/900 $\mu$m$^2$ and still more preferably 7 to 15/900 $\mu$m$^2$. When the depression density is lower than 5/900 $\mu$m$^2$, the effect on the glossiness is small, which is unfavorable. Although the upper limit of depression density is not more than 900/900 $\mu$m$^2$ which is the practical limit of depression formation, when it is higher than 25/900 $\mu$m$^2$, it can be unfavorable because particles readily fall off to contaminate a production line.

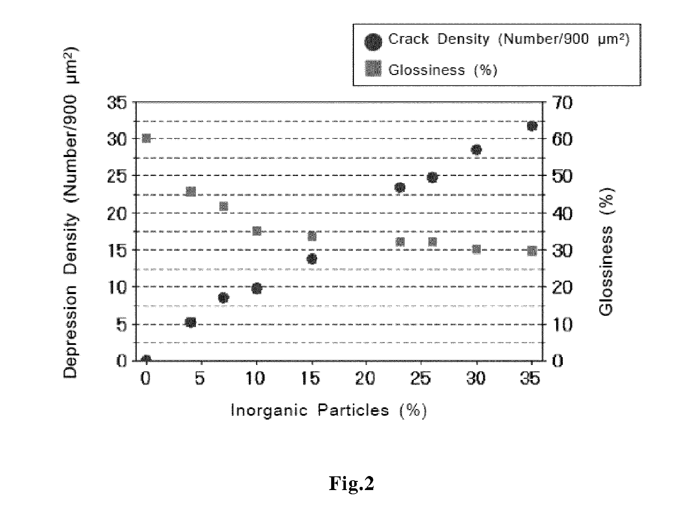

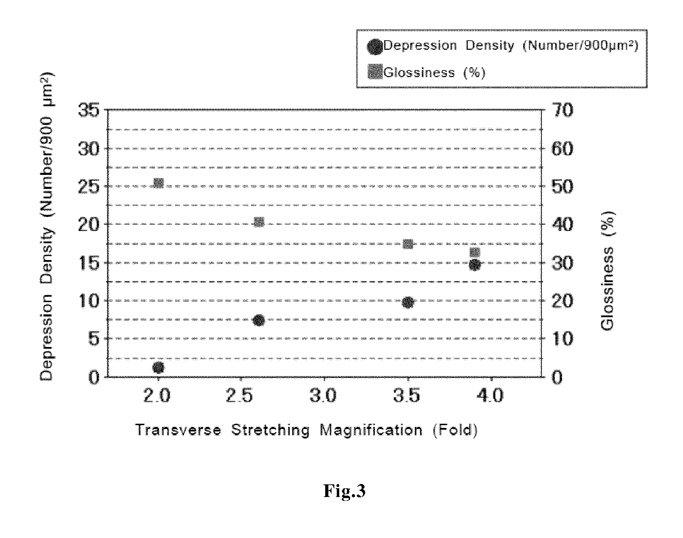

The depression density can be controlled by the content of inorganic particles. As shown in Figure 2, the greater the content, the higher the depression density, and the lower the content, the lower the depression density. Alternatively, it can be controlled also by the transverse stretching magnification after application. As shown in Figure 3, the greater the magnification leads the higher the depression density, and the lower the magnification leads the lower the depression density.

Further, the depression density can be controlled also by the surface pH of the resin layer. Taking the surface pH of the resin layer as P, and the number density of particles (number/$\mu$m$^2$) in the resin layer as R, it is preferable to satisfy the following equations (1) to (3) in terms of glossiness and density of depressions.

$$7.1 \leq P \leq 8.5 \quad (1)$$

$$0 \leq R \leq 5 \quad (2)$$

$$R \geq 7.6 - P \quad (3)$$

Further, it is more preferable to exclude the range where the following equations (4) and (5) are simultaneously satisfied in terms of glossiness.

$$0.3 < R < 0.7 \quad (4)$$

$$7.1 < P < 7.5 \quad (5)$$

Furthermore, when the following equations (6) and (7) are satisfied, the glossiness is in the lowest glossiness range, which is most preferred.

$$7.6 \leq P \leq 8.5 \quad (6)$$

$$0 \leq R \leq 5 \quad (7)$$

The surface pH (P) in the equations described above can be controlled by coating solution pH. The pH of the coating solution can be controlled by the amount of the pH adjuster mentioned above. Also, the number density of particles (R) can be controlled by the amount of the inorganic particles mentioned above.

By the depressions of the resin layer, a film with low glossiness that could not be achieved by the prior art can be readily produced.

To the coating solution in the present invention, a solvent can be added to the extent that the object of the present invention is not impaired for the purpose of improving the handleability during coating and controlling the resin layer thickness. Specific examples include alcoholic solvents such as methanol, ethanol, and isopropyl alcohol, purified water, and the like.

Further, other additives, for example, cross-linking agents, surfactants, antifoaming agents, leveling agents, heat stabilizers, oxidation stabilizers, organic lubricants, fillers, nucleating agents, dyes, dispersants, and the like may be contained to the extent that the object of the present invention is not impaired.

(3) Film Properties

The white laminated film of the present invention preferably has a glossiness of not more than 45%, more preferably not more than 43%, and still more preferably not more than 40%. When the glossiness is higher than 45%, in the use as a reflective film, irregular reflection from a light source readily occurs, and besides the scratch resistance decreases. The degree of whiteness of the white laminated film is preferably 50% or more, preferably in the range of 60 to 100%, in terms of reflectance. The degree of whiteness is determined from the following equation by measuring XYZ values which represent tristimulus values of the color of a sample by the reflection method using a spectrophotometer SE-2000 manufactured by NIPPON DENSHOKU INDUSTORIES CO., LTD., which is designed based on Richard S. Hunter's color-difference formula, as described in JIS Z 8722 and Z 8730.

$$\text{Degree of whiteness} = 4 \times 0.847 \times Z - 3 \times Y \ (\%)$$

In the present invention, if the thickness of the resin layer after biaxial stretching is 30 to 400 nm, preferably 50 to 200 nm, it is good enough for practical use, but it is more preferably 30 to 200 nm and still more preferably 50 to 160 nm. When the thickness is thinner than 30 nm, falling off of the inorganic particles readily occurs, which is unfavorable. When it is thicker than 200 nm, the film undergoes large changes in color tone when the film is recovered, made into a chip for recycling, and formed into a film again, which is unfavorable.

In the present invention, the surface roughness Rz (ten-point average roughness) on the resin layer-side of the biaxially-oriented white laminated polyester film is preferably 1.0 to 3.5 $\mu$m, more preferably 1.5 to 3.3 $\mu$m, and most preferably 2.0 to 3.3 $\mu$m. When it is less than 1.0 $\mu$m, the glossiness is unlikely to be low because depressions are not readily formed, which can be unfavorable. When it is more than 3.5 $\mu$m, it can be unfavorable because salients on the film surface readily fall off from the film and this can cause line contamination.

(4) Production Process

The process for producing a polyester resin (a1) will be described by way of an example, but it is not limited to such an example.

Using terephthalic acid as a dicarboxylic acid component and ethylene glycol as a diol component, antimony trioxide (polymerization catalyst) is added in an amount of 300 ppm in terms of antimony atoms relative to a resulting polyester pellet to carry out a polycondensation reaction, whereby a polyethylene terephthalate pellet (polyester resin (a1)) can be obtained.

The process for producing a polyester resin (a2) will be described by way of an example, but it is not limited to such an example.

Using terephthalic acid as a dicarboxylic acid component and $C_4$-$C_8$ alicyclic diol as a diol component, magnesium acetate, antimony trioxide, and phosphorous acid as catalysts is added in an amount of 300 ppm in terms of antimony atoms to carry out a polycondensation reaction, whereby a polyester resin (a2) formed by copolymerization of $C_4$-$C_8$ alicyclic diol and terephthalic acid can be obtained.

Next, the process for producing the white laminated film of the present invention will be described by way of an example, but the present invention is not limited to such an example.

A mixture comprising the polyester resin (a1), the polyester resin (a2), the cyclic olefin copolymer resin (b1), the inorganic particles (B2), and a dispersant is thoroughly vacuum dried as required and fed to an heated extruder in a film forming apparatus having the extruder. The cyclic olefin copolymer resin (b1) and the inorganic particles (B2) may be added by using a master chip prepared in advance by uniform melt-kneading or may be fed directly to a knead extruder. The polyester resin component (a2), for example, may be added when melt-kneading a mixture comprising the polyester resin (a1) and the cyclic olefin copolymer resin (b1) uniformly in advance and adding a master chip or may be fed directly to a knead extruder, and melt-kneading a mixture comprising the polyester resin (a1) and the cyclic olefin copolymer resin (b1) uniformly in advance and adding a master chip is more preferred because the dispersion of the cyclic olefin copolymer resin (b1) is promoted.

In melt extrusion, it is preferable to obtain a melt sheet by filtration through a mesh filter having openings of 40 μm or less, followed by introduction into a T-die head and extrusion molding.

The melt sheet is solidified by contact cooling on a drum, the surface temperature of which is cooled to 10 to 60°C, using static electricity to produce an unstretched monolayer film. The unstretched monolayer film is conducted to a group of rollers heated to a temperature of 70 to 120°C, stretched 2.5 to 4-fold in the longitudinal direction (machine direction, i.e., the travel direction of the film), and cooled with a group of rollers at a temperature of 20 to 50°C. Surface heating using an infrared ray heater may be performed during the stretching. Examples of such an infrared ray heater include Twin Tube transparent quartz glass carbon emitter produced by Heraeus K.K. Then, the uniaxially stretched film is coated with a coating solution by in-line coating, further, conducted to a tenter with both ends of the film held by clips, and stretched 2.5 to 4-fold in the direction perpendicular to the longitudinal direction (the width direction) in the atmosphere heated to a temperature of 90 to 150°C.

The stretching magnification is preferably 2 to 4-fold and more preferably 2.5 to 4-fold in the longitudinal direction and the width direction each. When the stretching magnification is not less than 2, glossiness decreases, which is preferred, and when the stretching magnification is not more than 4, the film does not readily break during the stretching, which is preferred. The area magnification of the stretching magnification (the longitudinal stretching magnification × the transverse stretching magnification) is preferably 9 to 15-fold. When the area magnification is less than 9-fold, a resulting biaxially stretched film will have an insufficient reflectance and film strength, and, on the other hand, when the area magnification is more than 15-fold, breakage tends to occur easily during the stretching.

After completion of crystal orientation of the biaxially stretched film obtained, in order to provide planarity and dimensional stability and to dry the coating solution, the biaxially stretched film is heat treated at a temperature of 150 to 240°C for 1 to 30 seconds continuously in the tenter, slowly cooled uniformly, and then cooled to room temperature. Thereafter, corona discharge treatment or the like is performed as required in order to further enhance adherence to other materials, and the biaxially stretched film is took up with a winder, whereby the white laminated film of the present invention can be obtained. During the heat treating process described above, relaxation treatment of 3 to 12% in the width direction or the longitudinal direction may be performed as required.

Generally, the higher the heat treatment temperature is, the higher the thermal dimensional stability becomes, and the white laminated film of the present invention is preferably heat treated at a high temperature (190°C or higher) in the film forming process. This is because the white laminated film of the present invention desirably has constant thermal dimensional stability. The white laminated film of the present invention is sometimes used as a reflective film for a surface light source (backlight) installed, for example, in a liquid crystal display. This is because, depending on the backlight, the temperature of the atmosphere inside the backlight can increase to about 100°C.

In particular, when the glass transition temperature Tg of the cyclic olefin copolymer resin (b1) is 110°C or higher, the cyclic olefin copolymer resin (b1) serving as a nucleating agent for generating depressions is less thermally deformable (does not crush) even upon heat treatment at a high temperature, and depressions can be formed on the resin layer; as a result, a film having excellent light resistance while maintaining high whiteness, reflectance properties, and lightweight properties can be obtained, which is preferred.

(5) Applications

The white laminated film of the present invention is a white film from which a white film with low glossiness can be produced readily and inexpensively in a stable manner and which has high reflectance properties and, in addition, excellent scratch resistance. For these reasons, examples of the preferred application of the white laminated film of the present invention include a plate-like material that is incorporated into a surface light source for light reflection. Specifically, the white laminated film of the present invention is preferably used as a reflecting plate for edge light for a liquid crystal screen, a reflecting plate for a surface light source of direct-type light, a reflector around a cold cathode fluorescent lamp, and the like.

(6) Definition/Measurement Method

A. Thickness of White Film and Resin Layer

A cross section of a white laminated film was observed under $\times$ 500 to 5,000 magnification using a field-emission scanning electron microscope "JSM-6700F" (manufactured by JEOL Ltd.) to take a cross-section photograph, from which the thickness of the white film was measured. The measurement was made at arbitrarily selected five points, and the mean value was used as a white film thickness. The thickness of the resin layer was measured from a distance from the white film surface to the resin layer surface of the cross-section photograph obtained. Because of the presence of irregularities on the resin layer surface, the measurement was made at ten points per one cross-section photograph at intervals of 1 $\mu$m at areas other than protruding portions due to the inorganic particles and hollow portions of depressions. This measurement was made for five photographs, and the mean value of 50 points in total was used as a resin layer thickness.

B. Depression Area and Depression Density

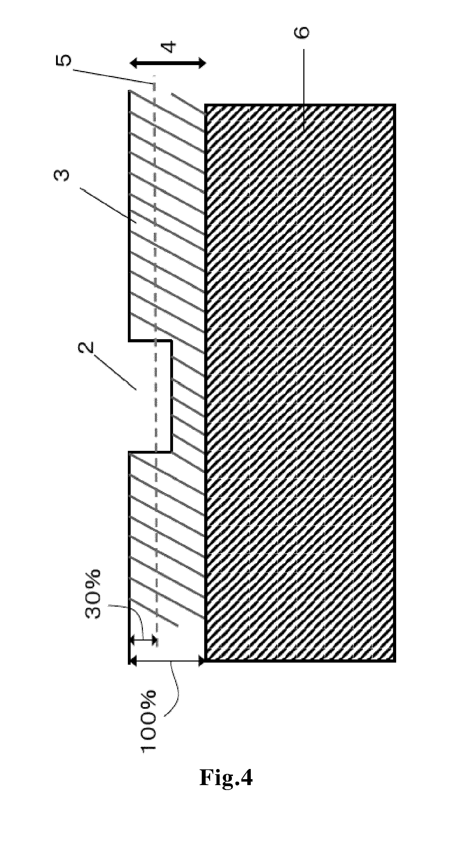

An atomic force microscope was used to scan an image at an area of 30-$\mu$m square measured visual field of 900 $\mu$m$^2$. Then, using the Grain Size Analysis function, when taking a resin layer thickness 4 as shown in Figure 4 as 100%, the value of 30% from the resin layer surface-side was defined as a threshold 5 representing the lower limit in the hollow direction, and hollow portions deeper than the threshold 5 were detected as a depression 2. A cursor was placed on each of the depressions obtained to read out an area, which was used as a depression area. With respect to depression density, the number of hollow depressions having an area of 1 to 20 $\mu$m$^2$ in the image in the 900-$\mu$m$^2$ area obtained above (number/900 $\mu$m$^2$) was counted. The counting was carried out in a similar manner at different five visual fields, and the mean value of the values was used as a depression density.
The measurement conditions are as follows:

Apparatus: Nanoscope III AFM (manufactured by Digital Instruments)
Cantilever: Silicon single crystal
Scanning mode: Tapping mode
Scan rate: 0.5 Hz
Measured Visual Field: 900 $\mu$m$^2$

C. Glossiness

Using a digital variable gloss meter UGV-5B (manufactured by Suga Test Instruments Co., Ltd.), glossiness was measured from the resin layer-side of the white laminated film in accordance with JIS Z-8741 (1997). The measurement conditions were incidence angle = 60° and acceptance angle = 60°. The number of samples was n = 5; the glossiness of each sample was measured, and the mean value were calculated.

D. Relative Reflectance

A $\varphi$ 60 integrating sphere 130-0632 (Hitachi Ltd.) (with an inner surface made of barium sulfate) and a 10° inclined spacer were installed in a spectrophotometer U-3410 (Hitachi Ltd.), in which conditions an optical reflectance at 560 nm was determined. For the optical reflectance, the value determined by measurement from the resin layer side of the white laminated film was used as a reflectance of the white film. As a reference white plate, a part number 210-0740 (aluminum oxide) available from Hitachi Instruments Service Co., Ltd. was used.

E. Line Contamination during Production

A taking-up roll of a winder after transverse stretching was visually observed, and assessment was made according to the criteria below.

A: Contamination not observable
B: Readily visually observable

F. Method of Measuring Surface pH (P)

A film sample was left to stand in the ordinary state (temperature 23°C, relative humidity 65%) for 24 hours, and then a surface pH was measured using a pH meter available from HORIBA, Ltd. "COMPACT pH meter twin pH (type B-212)" by the following method.
Ultrapure water with (23°C) a pH of 7.0 in an amount of 1.0 ml was added dropwise to a sensor to cover the sensor with ultrapure water. Then, a sample that had been cut into a rectangle of $5 \times 15$ mm such that two electrodes of the sensor part was covered was set such that a coating surface was in contact with droplets, and a measurement value after 1 minute was read out at a temperature of 23°C and a relative humidity of 65%. In the measurement, five from some of the film samples prepared were cut into the above size, and each of the five samples were measured once; the mean value was used as a surface pH value.

G. Method of Measuring pH of Coating Solution

A pH of a coating solution was measured using a pH meter available from HORIBA, Ltd. "COMPACT pH meter twinpH (type B-212)" by the following method. A prepared coating solution (23°C) in an amount of 1.0 ml was added dropwise to a sensor to cover the sensor with the coating solution, and a measurement value after 1 minute was read out at a temperature of 23°C and a relative humidity of 65%. The measurement was made five times in a similar manner, and the mean value was used as a pH value of the coating solution.

H. Method of Measuring Number Density of Particles (R)

The resin layer-side surface of the white laminated film was observed under $\times$ 5,000 magnification using a field-emission scanning electron microscope "JSM-6700F" (manufactured by JEOL Ltd.) to take a photograph, from which the particle number in a visual field area of 10 $\mu$m square was counted, and the particle number per $\mu m^2$ was calculated. The calculation was carried out in a similar manner at different five visual fields, and the mean value of the values was used as a number density of particles.
For aggregation parts where 10 or more particles per 2 $\mu$m square are aggregated when observed in a surface photograph, the value three times the number observed on the surface shall be counted.

I. Surface Roughness Rz (Ten-Point Average Roughness)

An atomic force microscope (AFM) was used to scan an image at an area of 100-$\mu$m square measured view of 10000 $\mu m^2$ on the resin layer-side surface of the biaxially-oriented white laminated polyester film. For the measured image obtained, a three-dimensional surface roughness was calculated by Off-Line Roughness Analysis to determine a ten-point average roughness Rz. Further, the measurement was made in a similar manner at five visual fields in different areas, and Rz was calculated by the mean value of the values. The measurement conditions are as follows:

Apparatus: NanoScope IIIa ver. 3.2 using AFM J scanner (available from Digital Instruments)
Probe: SPM probe NCH-W type available from Nanosensors, single-crystal silicon Scanning mode: Tapping mode
Scan field: 100 $\mu$m $\times$ 100 $\mu$m
Scan rate: 0.5 Hz

EXAMPLES

The present invention will now be described more specifically by way of Examples and the like, but the present invention is not limited thereto.

(1) White Film

Polyester Resin (a1)

Using terephthalic acid as an acid component and ethylene glycol as a glycol component, antimony trioxide (polymerization catalyst) was added in an amount of 300 ppm in terms of antimony atoms relative to a resulting polyester pellet to carry out a polycondensation reaction, whereby a polyethylene terephthalate pellet (PET) with a limiting viscosity of 0.63 dl/g and a terminal carboxyl group amount of 40 equivalents/ton was obtained. Using a differential thermal analyzer, the heat of crystal fusion was measured to be not less than 4.186 J/g, showing that the polyethylene terephthalate pellet was a crystalline polyester resin. The melting point Tm of this resin was measured to be 250°C.

Cyclic Olefin Copolymer Resin (b1)

A cyclic olefin resin "TOPAS" (available from Polyplastics Co., Ltd.) having a glass transition temperature of 178°C and a melt volume rate MVR (260°C/2.16 kg) of 4.5 ml/10 mim was used. Using a differential thermal analyzer, the heat of crystal fusion was measured to be less than 4.186 J/g, showing that the cyclic olefin resin was an amorphous resin.

Inorganic Particles (B2)

Titanium oxide (available from ISHIHARA SANGYO KABUSHIKI KAISHA, LTD., rutile-type titanium dioxide R-980, average particle size 0.24 $\mu$m).

Copolyester Resin (C)

As other additives, CHDM (cyclohexanedimethanol) copolymerized PET was used. This is a PET obtained by copolymerizing 30 mol% of cyclohexanedimethanol as the copolymerization glycol component. Using a differential thermal analyzer, the heat of crystal fusion was measured to be less than 4.186 J/g, showing that the CHDM copolymerized PET was an amorphous resin.

Copolyester Resin (D)

As other additives, CHDM (cyclohexanedimethanol) copolymerized PET was used. This is a PET obtained by copolymerizing 60 mol% of cyclohexanedimethanol as the copolymerization glycol component. Using a differential thermal analyzer, the heat of crystal fusion was measured to be less than 4.186 J/g, showing that the CHDM copolymerized PET was an amorphous resin.

Copolyester Resin (E)

As other additives, isophthalic acid copolymerized PET was used. This is a PET obtained by copolymerizing 17.5 mol% of isophthalic acid as dicarboxylic acid component. Using a differential thermal analyzer, the heat of crystal fusion was measured to be less than 4.186 J/g, exhibiting amorphous properties.

Dispersant (F)

As other additives, PBT-PAG (polybutylene terephthalate-polyalkylene glycol) block copolymer (available from DU PONT-TORAY CO., LTD., Hytrel 4047) was used. The resin is a block copolymer of PBT and PAG (mainly, polytetramethylene glycol). Using a differential thermal analyzer, the heat of crystal fusion was measured to be not less than 4.186 J/g, showing that the PBT-PAG block copolymer was a crystalline resin.

(2) Coating Solution

Acrylic Binder (G)

WATERSOL PW-1100 (available from DIC Corporation, 45% by weight solution) was diluted with purified water to a 35% by weight solution.

Acrylic Binder (K)

Nikasol A-08 (available from NIPPON CARBIDE INDUSTRIES CO., INC., 35% by weight solution)

Lithium Salt (H)

Lithium polystyrenesulfonate (available from TOSOH ORGANIC CHEMICAL CO., LTD., "SPINOMAR" (registered trademark) LiSS, 16% by weight solution).

Ammonium Salt (J)

Ammonium polystyrenesulfonate (available from TOSOH ORGANIC CHEMICAL CO., LTD., "SPINOMAR" (registered trademark) AmSS, 16% by weight solution).

Inorganic Particles (I)

Water dispersion of 10% by weight solution obtained by mixing silica particles having an average particle size of 0.3 μm with distilled water.
pH Adjuster (L)
Polyethyleneimine (available from NIPPON SHOKUBAI CO., LTD., "EPOMIN" (registered trademark) 100% by weight solution).

(Example 1)

A mixture of materials shown in Tables 1 to 4 was vacuum-dried at a temperature of 180°C for 3 hours and then fed to an extruder. After melt extrusion at a temperature of 280°C, the mixture was filtered through a 30-μm cut filter, and then introduced into a T-die head.
Then, the mixture was extruded from inside the T-die head into a sheet form to obtain a melt monolayer sheet, and the melt monolayer sheet was solidified by contact cooling on a drum, the surface temperature of which was maintained at 25°C, using the electrostatic application method to obtain an unstretched monolayer film. Thereafter, after preheating with a group of rollers heated to a temperature of 70°C, the unstretched monolayer film was stretched 3.6-fold in the longitudinal direction (machine direction) while being irradiated by a infrared ray heater (output: 1.4 kW, distance from the film: 15 mm, irradiation time: 0.72 sec) from both sides, and cooled with a group of rollers at a temperature of 25°C to obtain a uniaxially stretched film.
Further, thereafter, the drum-contacting side of the unstretched laminated film was subjected to corona discharge treatment in air, and a coating solution for forming a coated layer described below was applied to the treated surface by the bar coating method using a metering bar.
The uniaxially stretched film coated with the coating solution for forming a coated layer described above was conducted to a preheating zone at 110°C in a tenter with both ends held by clips, dried while being subjected to 5% slight stretching, and then successively and continuously stretched 3.5-fold in the direction perpendicular to the longitudinal direction (transverse direction) in a heating zone at 120°C. Further, successively, the film was subjected to heat treatment of 220°C in a heat treatment zone in the tenter, further, subjected to 4% relaxation treatment at 180°C in the transverse direction, followed by further 1% relaxation treatment at 110°C, and then took up after uniform slow cooling to thereby obtain a white film having the degree of whiteness of 86.0% in which a coated layer with a thickness of 150 nm was provided on a film with a thickness of 188 μm. The composition and production conditions of the film are as shown in Tables 1 to 4. The evaluation results of physical properties are shown in Tables 5 and 6.

(Preparation of Coating Solution)

Each component described above was formulated based on the formulation ratio value in Tables 1 to 4 such that the solid content ratio was as shown in Tables 1 to 4, and purified water was used to make an adjustment such that the solid content concentration after formulation was 6.0%. For the ratio of the solid contents other than the inorganic particles, the solid content ratio (% by weight) of each component was calculated based on the total weight of G, K, H, J, and L, components other than the inorganic particles (I). For the order of the formulation, the above-described coating agents G, K, H, J, I, and L were formulated into a vessel containing weighed purified water in the order mentioned. After the formulation, the formulation was stirred with a universal stirrer for 10 minutes, and then the coating solution was adjusted.

(Examples 2 to 31)

Films were produced in the same manner as in Example 1 using the film composition, production conditions, and coating solution composition shown in Tables 1 and 3. The evaluation results of physical properties are shown in Table 5.

(Comparative Examples 1 to 21)

Films were produced in the same manner as in Example 1 using the film composition, production conditions, and coating solution composition shown in Tables 2 and 4. The evaluation results of physical properties are shown in Table 6. In Comparative Example 7, film breakage occurred in the transverse stretching process, and a film could not be produced.

Table 1

| | Composition of White Film | | | | | Stretching | | Composition of Coating Solution | | | | | |
|---|---|---|---|---|---|---|---|---|---|---|---|---|---|
| | (a) | (b1) | (B2) | Other Additives | | Longitudinal Stretching | Transverse Stretching | Solid Content Ratio (% by weight) | | | | | |
| | Content (% by weight) | Content (% by weight) | Content (% by weight) | Type | Content (% by weight) | Magnification (fold) | Magnification (fold) | G | K | H | J | I | L |
| Example 1 | 80 | 5 | 15 | | | 3.6 | 3.5 | 70.1 | 0.0 | 19.9 | 0.0 | 10.0 | 0.0 |
| Example 2 | 75 | 5 | 15 | (C) | 5 | 3.6 | 3.5 | 70.1 | 0.0 | 19.9 | 0.0 | 10.0 | 0.0 |
| Example 3 | 75 | 5 | 15 | (D) | 5 | 3.6 | 3.5 | 70.1 | 0.0 | 19.9 | 0.0 | 10.0 | 0.0 |
| Example 4 | 75 | 5 | 15 | (E) | 5 | 3.6 | 3.5 | 70.1 | 0.0 | 19.9 | 0.0 | 10.0 | 0.0 |
| Example 5 | 75 | 5 | 15 | (F) | 5 | 3.6 | 3.5 | 70.1 | 0.0 | 19.9 | 0.0 | 10.0 | 0.0 |
| Example 6 | 80 | 5 | 15 | | | 3.6 | 3.5 | 62.3 | 0.0 | 17.7 | 0.0 | 20.0 | 0.0 |
| Example 7 | 80 | 5 | 15 | | | 3.6 | 3.5 | 74.8 | 0.0 | 21.2 | 0.0 | 4.0 | 0.0 |
| Example 8 | 80 | 5 | 15 | | | 3.6 | 3.5 | 72.5 | 0.0 | 20.5 | 0.0 | 7.0 | 0.0 |
| Example 9 | 80 | 5 | 15 | | | 3.6 | 3.5 | 66.2 | 0.0 | 18.8 | 0.0 | 15.0 | 0.0 |
| Example 10 | 80 | 5 | 15 | | | 3.6 | 3.5 | 60.0 | 0.0 | 17.0 | 0.0 | 23.0 | 0.0 |
| Example 11 | 80 | 5 | 15 | | | 3.6 | 3.5 | 57.7 | 0.0 | 16.3 | 0.0 | 26.0 | 0.0 |
| Example 12 | 80 | 5 | 15 | | | 3.6 | 2.6 | 70.1 | 0.0 | 19.9 | 0.0 | 10.0 | 0.0 |
| Example 13 | 80 | 5 | 15 | | | 3.6 | 3.9 | 70.1 | 0.0 | 19.9 | 0.0 | 10.0 | 0.0 |
| Example 14 | 80 | 5 | 15 | | | 3.6 | 3.5 | 0.0 | 64.4 | 16.1 | 0.0 | 15.3 | 4.2 |
| Example 15 | 80 | 5 | 15 | | | 3.6 | 3.5 | 0.0 | 55.5 | 13.9 | 0.0 | 17.4 | 13.2 |

EP 2 610 651 A2

(continued)

| | Composition of White Film | | | | | Stretching | | Composition of Coating Solution | | | | | |
| --- | --- | --- | --- | --- | --- | --- | --- | --- | --- | --- | --- | --- | --- |
| | (a) | (b1) | (B2) | Other Additives | | Longitudinal Stretching | Transverse Stretching | Solid Content Ratio (% by weight) | | | | | |
| | Content (% by weight) | Content (% by weight) | Content (% by weight) | Type | Content (% by weight) | Magnification (fold) | Magnification (fold) | G | K | H | J | I | L |
| Example 16 | 80 | 5 | 15 | | | 3.6 | 3.5 | 0.0 | 77.6 | 19.4 | 0.0 | 0.0 | 3.0 |
| Example 17 | 80 | 5 | 15 | | | 3.6 | 3.5 | 0.0 | 40.0 | 10.0 | 0.0 | 0.0 | 50.0 |
| Example 18 | 80 | 5 | 15 | | | 3.6 | 3.5 | 0.0 | 50.5 | 12.6 | 0.0 | 9.9 | 27.0 |
| Example 19 | 80 | 5 | 15 | | | 3.6 | 3.5 | 0.0 | 38.1 | 9.5 | 0.0 | 20.6 | 31.7 |
| Example 20 | 80 | 5 | 15 | | | 3.6 | 3.5 | 0.0 | 28.6 | 7.1 | 0.0 | 40.5 | 23.8 |
| Example 21 | 80 | 5 | 15 | | | 3.6 | 3.5 | 0.0 | 47.6 | 11.9 | 0.0 | 40.5 | 0.0 |
| Example 22 | 80 | 5 | 15 | | | 3.6 | 3.5 | 0.0 | 64.5 | 16.1 | 0.0 | 19.4 | 0.0 |
| Example 23 | 80 | 5 | 15 | | | 3.6 | 3.5 | 0.0 | 50.0 | 12.5 | 0.0 | 30.6 | 6.9 |
| Example 24 | 80 | 5 | 15 | | | 3.6 | 3.5 | 0.0 | 62.9 | 15.7 | 0.0 | 14.5 | 6.8 |
| Example 25 | 80 | 5 | 15 | | | 3.6 | 3.5 | 64.4 | 0.0 | 16.1 | 0.0 | 15.3 | 4.2 |
| Example 26 | 80 | 5 | 15 | | | 3.6 | 3.5 | 0.0 | 68.2 | 22.7 | 0.0 | 9.1 | 0.0 |
| Example 27 | 80 | 5 | 15 | | | 3.6 | 3.5 | 0.0 | 63.6 | 22.7 | 0.0 | 9.1 | 4.5 |

(continued)

| | Composition of White Film | | | | | Stretching | | Composition of Coating Solution | | | | | |
|---|---|---|---|---|---|---|---|---|---|---|---|---|---|
| | (a) | (b1) | (B2) | Other Additives | | Longitudinal Stretching | Transverse Stretching | Solid Content Ratio (% by weight) | | | | | |
| | Content (% by weight) | Content (% by weight) | Content (% by weight) | Type | Content (% by weight) | Magnification (fold) | Magnification (fold) | G | K | H | J | I | L |
| Example 28 | 80 | 5 | 15 | | | 3.6 | 3.5 | 0.0 | 66.7 | 23.8 | 0.0 | 4.8 | 4.8 |
| Example 29 | 80 | 5 | 15 | | | 3.6 | 3.5 | 0.0 | 45.2 | 11.3 | 0.0 | 40.5 | 3.0 |
| Example 30 | 80 | 5 | 15 | | | 3.6 | 3.5 | 50.6 | 0.0 | 14.4 | 0.0 | 35.0 | 0.0 |
| Example 31 | 80 | 5 | 15 | | | 3.6 | 3.5 | 54.5 | 0.0 | 15.5 | 0.0 | 30.0 | 0.0 |

Table 2

| | Composition of White Film | | | | | Stretching | | Composition of Coating Solution | | | | | |
|---|---|---|---|---|---|---|---|---|---|---|---|---|---|
| | (a) | (b1) | (B2) | Other Additives | | Longitudinal Stretching | Transverse Stretching | Solid Content Ratio (% by weight) | | | | | |
| | Content (% by weight) | Content (% by weight) | Content (% by weight) | Type | Content (% by weight) | Magnification (fold) | Magnification (fold) | G | K | H | J | I | L |
| Comp. Ex. 1 | 80 | 5 | 15 | | | 3.6 | 3.5 | 70.1 | 0.0 | 0.0 | 19.9 | 10.0 | 0.0 |
| Comp. Ex. 2 | 80 | 5 | 15 | | | 3.6 | 3.5 | 77.9 | 0.0 | 22.1 | 0.0 | 0.0 | 0.0 |
| Comp. Ex. 3 | 80 | 5 | 15 | | | 3.6 | 3.5 | 90.0 | 0.0 | 0.0 | 0.0 | 10.0 | 0.0 |
| Comp. Ex. 4 | 80 | 5 | 15 | | | 3.6 | 3.5 | 0.0 | 0.0 | 0.0 | 0.0 | 0.0 | 0.0 |
| Comp. Ex. 5 | 80 | 5 | 15 | | | 3.6 | Not performed | 70.1 | 0.0 | 19.9 | 0.0 | 10.0 | 0.0 |
| Comp. Ex. 6 | 80 | 5 | 15 | | | 3.6 | 2 | 70.1 | 0.0 | 19.9 | 0.0 | 10.0 | 0.0 |
| Comp. Ex. 7 | 80 | 5 | 15 | | | 3.6 | 4.2 | 70.1 | 0.0 | 19.9 | 0.0 | 10.0 | 0.0 |
| Comp. Ex. 8 | 80 | 5 | 15 | | | 3.6 | 3.5 | 76.3 | 0.0 | 21.7 | 0.0 | 2.0 | 0.0 |
| Comp. Ex. 9 | 80 | 5 | 15 | | | 3.6 | 3.5 | 0.0 | 63.1 | 27.0 | 0.0 | 9.9 | 0.0 |
| Comp. Ex. 10 | 80 | 5 | 15 | | | 3.6 | 3.5 | 0.0 | 41.7 | 17.9 | 0.0 | 40.5 | 0.0 |
| Comp. Ex. 11 | 80 | 5 | 15 | | | 3.6 | 3.5 | 0.0 | 21.4 | 5.4 | 0.0 | 40.5 | 32.7 |
| Comp. Ex. 12 | 80 | 5 | 15 | | | 3.6 | 3.5 | 0.0 | 22.1 | 5.5 | 0.0 | 31.0 | 41.4 |

(continued)

| | Composition of White Film | | | | | Stretching | | Composition of Coating Solution | | | | | |
| | (a) | (b1) | (B2) | Other Additives | | Longitudinal Stretching | Transverse Stretching | Solid Content Ratio (% by weight) | | | | | |
| | Content (% by weight) | Content (% by weight) | Content (% by weight) | Type | Content (% by weight) | Magnification (fold) | Magnification (fold) | G | K | H | J | I | L |
|---|---|---|---|---|---|---|---|---|---|---|---|---|---|
| Comp. Ex. 13 | 80 | 5 | 15 | | | 3.6 | 3.5 | 0.0 | 27.1 | 6.8 | 0.0 | 15.3 | 50.8 |
| Comp. Ex. 14 | 80 | 5 | 15 | | | 3.6 | 3.5 | 0.0 | 36.0 | 9.0 | 0.0 | 0.0 | 55.0 |
| Comp. Ex. 15 | 80 | 5 | 15 | | | 3.6 | 3.5 | 0.0 | 80.0 | 20.0 | 0.0 | 0.0 | 0.0 |
| Comp. Ex. 16 | 80 | 5 | 15 | | | 3.6 | 3.5 | 0.0 | 74.1 | 18.5 | 0.0 | 7.4 | 0.0 |
| Comp. Ex. 17 | 80 | 5 | 15 | | | 3.6 | 3.5 | 0.0 | 43.9 | 11.0 | 0.0 | 42.2 | 2.9 |
| Comp. Ex. 18 | 80 | 5 | 15 | | | 3.6 | 3.5 | 0.0 | 66.7 | 23.1 | 0.0 | 7.4 | 2.8 |
| Comp. Ex. 19 | 80 | 5 | 15 | | | 3.6 | 3.5 | 0.0 | 64.8 | 24.1 | 0.0 | 7.4 | 3.7 |
| Comp. Ex. 20 | 80 | 5 | 15 | | | 3.6 | 3.5 | 0.0 | 66.0 | 24.5 | 0.0 | 5.7 | 3.8 |
| Comp. Ex. 21 | 80 | 5 | 15 | | | 3.6 | 3.5 | 0.0 | 64.8 | 25.9 | 0.0 | 7.4 | 1.9 |

Table 3

| | Composition of Coating Solution | | | | | | Formulation Amount of Coating Agent | | | | | | |
|---|---|---|---|---|---|---|---|---|---|---|---|---|---|
| | Ratio of Solid Contents Other Than Inorganic Particles (% by weight) | | | | | Concentration of Inorganic Particles Based on Solid Contents Other Than Inorganic Particles (% by weight) | Formulation Ratio of Coating Agent (% by weight) | | | | | | |
| | G | K | H | J | L | I | Purified Water | G | K | H | J | I | L |
| Example 1 | 77.9 | 0.0 | 22.1 | 0.0 | 0.0 | 10.0 | 72.4 | 13.4 | 0.0 | 8.3 | 0.0 | 6.0 | 0.0 |
| Example 2 | 77.9 | 0.0 | 22.1 | 0.0 | 0.0 | 10.0 | 72.4 | 13.4 | 0.0 | 8.3 | 0.0 | 6.0 | 0.0 |
| Example 3 | 77.9 | 0.0 | 22.1 | 0.0 | 0.0 | 10.0 | 72.4 | 13.4 | 0.0 | 8.3 | 0.0 | 6.0 | 0.0 |
| Example 4 | 77.9 | 0.0 | 22.1 | 0.0 | 0.0 | 10.0 | 72.4 | 13.4 | 0.0 | 8.3 | 0.0 | 6.0 | 0.0 |
| Example 5 | 77.9 | 0.0 | 22.1 | 0.0 | 0.0 | 10.0 | 72.4 | 13.4 | 0.0 | 8.3 | 0.0 | 6.0 | 0.0 |
| Example 6 | 77.9 | 0.0 | 22.1 | 0.0 | 0.0 | 20.0 | 66.3 | 13.4 | 0.0 | 8.3 | 0.0 | 12.0 | 0.0 |
| Example 7 | 77.9 | 0.0 | 22.1 | 0.0 | 0.0 | 4.0 | 76.0 | 13.4 | 0.0 | 8.3 | 0.0 | 2.4 | 0.0 |
| Example 8 | 77.9 | 0.0 | 22.1 | 0.0 | 0.0 | 7.0 | 74.1 | 13.4 | 0.0 | 8.3 | 0.0 | 4.2 | 0.0 |
| Example 9 | 77.9 | 0.0 | 22.1 | 0.0 | 0.0 | 15.0 | 69.3 | 13.4 | 0.0 | 8.3 | 0.0 | 9.0 | 0.0 |
| Example 10 | 77.9 | 0.0 | 22.1 | 0.0 | 0.0 | 23.0 | 64.5 | 13.4 | 0.0 | 8.3 | 0.0 | 13.8 | 0.0 |
| Example 11 | 77.9 | 0.0 | 22.1 | 0.0 | 0.0 | 26.0 | 62.7 | 13.4 | 0.0 | 8.3 | 0.0 | 15.6 | 0.0 |
| Example 12 | 77.9 | 0.0 | 22.1 | 0.0 | 0.0 | 10.0 | 72.4 | 13.4 | 0.0 | 8.3 | 0.0 | 6.0 | 0.0 |
| Example 13 | 77.9 | 0.0 | 22.1 | 0.0 | 0.0 | 10.0 | 72.4 | 13.4 | 0.0 | 8.3 | 0.0 | 6.0 | 0.0 |
| Example 14 | 0.0 | 76.0 | 19.0 | 0.0 | 5.0 | 18.0 | 68.7 | 0.0 | 13.0 | 7.1 | 0.0 | 10.8 | 0.3 |
| Example 15 | 0.0 | 67.2 | 16.8 | 0.0 | 16.0 | 21.0 | 68.6 | 0.0 | 11.5 | 6.3 | 0.0 | 12.6 | 1.0 |
| Example 16 | 0.0 | 77.6 | 19.4 | 0.0 | 3.0 | 0.0 | 79.2 | 0.0 | 13.3 | 7.3 | 0.0 | 0.0 | 0.2 |

(continued)

| | | Composition of Coating Solution | | | | | | Formulation Amount of Coating Agent | | | | | | |
|---|---|---|---|---|---|---|---|---|---|---|---|---|---|---|
| | | Ratio of Solid Contents Other Than Inorganic Particles (% by weight) | | | | | Concentration of Inorganic Particles Based on Solid Contents Other Than Inorganic Particles (% by weight) | Formulation Ratio of Coating Agent (% by weight) | | | | | | |
| | | G | K | H | J | L | I | Purified Water | G | K | H | J | I | L |
| Example 17 | | 0.0 | 40.0 | 10.0 | 0.0 | 50.0 | 0.0 | 86.4 | 0.0 | 6.9 | 3.8 | 0.0 | 0.0 | 3.0 |
| Example 18 | | 0.0 | 56.0 | 14.0 | 0.0 | 30.0 | 11.0 | 76.8 | 0.0 | 9.6 | 5.3 | 0.0 | 6.6 | 1.8 |
| Example 19 | | 0.0 | 48.0 | 12.0 | 0.0 | 40.0 | 26.0 | 69.3 | 0.0 | 8.2 | 4.5 | 0.0 | 15.6 | 2.4 |
| Example 20 | | 0.0 | 48.0 | 12.0 | 0.0 | 40.0 | 68.0 | 44.1 | 0.0 | 8.2 | 4.5 | 0.0 | 40.8 | 2.4 |
| Example 21 | | 0.0 | 80.0 | 20.0 | 0.0 | 0.0 | 68.0 | 38.0 | 0.0 | 13.7 | 7.5 | 0.0 | 40.8 | 0.0 |
| Example 22 | | 0.0 | 80.0 | 20.0 | 0.0 | 0.0 | 24.0 | 64.4 | 0.0 | 13.7 | 7.5 | 0.0 | 14.4 | 0.0 |
| Example 23 | | 0.0 | 72.0 | 18.0 | 0.0 | 10.0 | 44.0 | 53.9 | 0.0 | 12.3 | 6.8 | 0.0 | 26.4 | 0.6 |
| Example 24 | | 0.0 | 73.6 | 18.4 | 0.0 | 8.0 | 17.0 | 69.8 | 0.0 | 12.6 | 6.9 | 0.0 | 10.2 | 0.5 |
| Example 25 | | 76.0 | 0.0 | 19.0 | 0.0 | 5.0 | 18.0 | 68.7 | 13.0 | 0.0 | 7.1 | 0.0 | 10.8 | 0.3 |
| Example 26 | | 0.0 | 75.0 | 25.0 | 0.0 | 0.0 | 10.0 | 71.8 | 0.0 | 12.9 | 9.4 | 0.0 | 6.0 | 0.0 |
| Example 27 | | 0.0 | 70.0 | 25.0 | 0.0 | 5.0 | 10.0 | 72.3 | 0.0 | 12.0 | 9.4 | 0.0 | 6.0 | 0.3 |
| Example 28 | | 0.0 | 70.0 | 25.0 | 0.0 | 5.0 | 5.0 | 75.3 | 0.0 | 12.0 | 9.4 | 0.0 | 3.0 | 0.3 |
| Example 29 | | 0.0 | 76.0 | 19.0 | 0.0 | 5.0 | 68.0 | 38.7 | 0.0 | 13.0 | 7.1 | 0.0 | 40.8 | 0.3 |
| Example 30 | | 77.8 | 0.0 | 22.2 | 0.0 | 0.0 | 53.8 | 46.0 | 13.3 | 0.0 | 8.3 | 0.0 | 32.3 | 0.0 |
| Example 31 | | 77.9 | 0.0 | 22.1 | 0.0 | 0.0 | 42.9 | 52.6 | 13.3 | 0.0 | 8.3 | 0.0 | 25.7 | 0.0 |

Table 4

| | Composition of Coating Solution | | | | | | Formulation Amount of Coating Agent | | | | | | |
|---|---|---|---|---|---|---|---|---|---|---|---|---|---|
| | Ratio of Solid Contents Other Than Inorganic Particles (% by weight) | | | | | Concentration of Inorganic Particles Based on Solid Contents Other Than Inorganic Particles (% by weight) | Formulation Ratio of Coating Agent (% by weight) | | | | | | |
| | G | K | H | J | L | I | Purified Water | G | K | H | J | I | L |
| Comp. Ex. 1 | 77.9 | 0.0 | 0.0 | 22.1 | 0.0 | 10.0 | 72.4 | 13.4 | 0.0 | 0.0 | 8.3 | 6.0 | 0.0 |
| Comp. Ex. 2 | 77.9 | 0.0 | 22.1 | 0.0 | 0.0 | 0.0 | 78.4 | 13.4 | 0.0 | 8.3 | 0.0 | 0.0 | 0.0 |
| Comp. Ex. 3 | 100.0 | 0.0 | 0.0 | 0.0 | 0.0 | 10.0 | 76.9 | 17.1 | 0.0 | 0.0 | 0.0 | 6.0 | 0.0 |
| Comp. Ex. 4 | No coating | | | | | | No coating | | | | | | |
| Comp. Ex. 5 | 77.9 | 0.0 | 22.1 | 0.0 | 0.0 | 10.0 | 72.4 | 13.4 | 0.0 | 8.3 | 0.0 | 6.0 | 0.0 |
| Comp. Ex. 6 | 77.9 | 0.0 | 22.1 | 0.0 | 0.0 | 10.0 | 72.4 | 13.4 | 0.0 | 8.3 | 0.0 | 6.0 | 0.0 |
| Comp. Ex. 7 | 77.9 | 0.0 | 22.1 | 0.0 | 0.0 | 10.0 | 72.4 | 13.4 | 0.0 | 8.3 | 0.0 | 6.0 | 0.0 |
| Comp. Ex. 8 | 77.9 | 0.0 | 22.1 | 0.0 | 0.0 | 2.0 | 77.2 | 13.4 | 0.0 | 8.3 | 0.0 | 1.2 | 0.0 |
| Comp. Ex. 9 | 0.0 | 70.0 | 30.0 | 0.0 | 0.0 | 11.0 | 70.2 | 0.0 | 12.0 | 11.3 | 0.0 | 6.6 | 0.0 |
| Comp. Ex. 10 | 0.0 | 70.0 | 30.0 | 0.0 | 0.0 | 68.0 | 36.0 | 0.0 | 12.0 | 11.3 | 0.0 | 40.8 | 0.0 |
| Comp. Ex. 11 | 0.0 | 36.0 | 9.0 | 0.0 | 55.0 | 68.0 | 46.4 | 0.0 | 6.2 | 3.4 | 0.0 | 40.8 | 3.3 |
| Comp. Ex. 12 | 0.0 | 32.0 | 8.0 | 0.0 | 60.0 | 45.0 | 60.9 | 0.0 | 5.5 | 3.0 | 0.0 | 27.0 | 3.6 |
| Comp. Ex. 13 | 0.0 | 32.0 | 8.0 | 0.0 | 60.0 | 18.0 | 77.1 | 0.0 | 5.5 | 3.0 | 0.0 | 10.8 | 3.6 |
| Comp. Ex. 14 | 0.0 | 36.0 | 9.0 | 0.0 | 55.0 | 0.0 | 87.2 | 0.0 | 6.2 | 3.4 | 0.0 | 0.0 | 3.3 |

EP 2 610 651 A2

| | Composition of Coating Solution | | | | | | Formulation Amount of Coating Agent | | | | | | |
|---|---|---|---|---|---|---|---|---|---|---|---|---|---|
| | Ratio of Solid Contents Other Than Inorganic Particles (% by weight) | | | | | Concentration of Inorganic Particles Based on Solid Contents Other Than Inorganic Particles (% by weight) | Formulation Ratio of Coating Agent (% by weight) | | | | | | |
| | G | K | H | J | L | I | Purified Water | G | K | H | J | I | L |
| Comp. Ex. 15 | 0.0 | 80.0 | 20.0 | 0.0 | 0.0 | 0.0 | 78.8 | 0.0 | 13.7 | 7.5 | 0.0 | 0.0 | 0.0 |
| Comp. Ex. 16 | 0.0 | 80.0 | 20.0 | 0.0 | 0.0 | 8.0 | 74.0 | 0.0 | 13.7 | 7.5 | 0.0 | 4.8 | 0.0 |
| Comp. Ex. 17 | 0.0 | 76.0 | 19.0 | 0.0 | 5.0 | 73.0 | 35.7 | 0.0 | 13.0 | 7.1 | 0.0 | 43.8 | 0.3 |
| Comp. Ex. 18 | 0.0 | 72.0 | 25.0 | 0.0 | 3.0 | 8.0 | 73.3 | 0.0 | 12.3 | 9.4 | 0.0 | 4.8 | 0.2 |
| Comp. Ex. 19 | 0.0 | 70.0 | 26.0 | 0.0 | 4.0 | 8.0 | 73.2 | 0.0 | 12.0 | 9.8 | 0.0 | 4.8 | 0.2 |
| Comp. Ex. 20 | 0.0 | 70.0 | 26.0 | 0.0 | 4.0 | 6.0 | 74.4 | 0.0 | 12.0 | 9.8 | 0.0 | 3.6 | 0.2 |
| Comp. Ex. 21 | 0.0 | 70.0 | 28.0 | 0.0 | 2.0 | 8.0 | 72.6 | 0.0 | 12.0 | 10.5 | 0.0 | 4.8 | 0.1 |

EP 2 610 651 A2

Table 5

| | Film Thickness (μm) | Resin Layer (Coating Layer) Thickness (nm) | Coating Solution pH | Glossiness (%) | Depression Density (Number/900 μm$^2$) | Surface pH (P) | Number Density of Particles (Number/ μm$^2$) | Relative Reflectance (%) | Surface Roughness Rz | Line Contamination |
|---|---|---|---|---|---|---|---|---|---|---|
| Example 1 | 188 | 150 | 7.5 | 35.1 | 9.8 | 7.3 | 0.8 | 100.5 | 1.25 | A |
| Example 2 | 188 | 150 | 7.5 | 34.8 | 10.0 | 7.2 | 0.8 | 100.9 | 1.28 | A |
| Example 3 | 188 | 150 | 7.5 | 34.5 | 10.6 | 7.2 | 0.8 | 100.8 | 1.27 | A |
| Example 4 | 188 | 150 | 7.5 | 34.7 | 10.2 | 7.3 | 0.8 | 101.1 | 1.26 | A |
| Example 5 | 188 | 150 | 7.5 | 36.1 | 9.8 | 7.2 | 0.8 | 101.0 | 1.25 | A |
| Example 6 | 188 | 150 | 7.5 | 32.8 | 17.8 | 7.3 | 1.7 | 100.4 | 1.45 | A |
| Example 7 | 188 | 150 | 7.5 | 45.8 | 5.2 | 7.5 | 0.4 | 100.6 | 1.08 | A |
| Example 8 | 188 | 150 | 7.5 | 41.8 | 8.6 | 7.5 | 0.5 | 100.6 | 1.16 | A |
| Example 9 | 188 | 150 | 7.5 | 33.8 | 13.8 | 7.2 | 1.3 | 100.5 | 1.29 | A |
| Example 10 | 188 | 150 | 7.5 | 32.3 | 23.5 | 7.3 | 1.8 | 100.4 | 1.41 | A |
| Example 11 | 188 | 150 | 7.5 | 32.2 | 24.8 | 7.2 | 1.9 | 100.3 | 1.53 | A |
| Example 12 | 248 | 195 | 7.5 | 40.8 | 7.5 | 7.3 | 1 | 97.8 | 1.43 | A |
| Example 13 | 175 | 135 | 7.5 | 32.9 | 14.8 | 7.3 | 0.7 | 100.8 | 1.18 | A |
| Example 14 | 188 | 150 | 9.6 | 12.2 | 95.2 | 7.7 | 1.3 | 100.5 | 1.82 | A |
| Example 15 | 188 | 150 | 10.8 | 8.3 | 98.3 | 8.2 | 1.5 | 100.6 | 2.34 | A |
| Example 16 | 188 | 150 | 9.1 | 28.7 | 75.5 | 7.6 | 0.0 | 100.6 | 1.78 | A |

EP 2 610 651 A2

| | Film Thickness (μm) | Resin Layer (Coating Layer) Thickness (nm) | Coating Solution pH | Glossiness (%) | Depression Density (Number/900 μm²) | Surface pH (P) | Number Density of Particles (Number/μm²) | Relative Reflectance (%) | Surface Roughness Rz | Line Contamination |
|---|---|---|---|---|---|---|---|---|---|---|
| Example 17 | 188 | 150 | 11.1 | 24.8 | 72.8 | 8.5 | 0.0 | 100.7 | 2.41 | A |
| Example 18 | 188 | 150 | 11 | 10.5 | 91.8 | 8.4 | 0.8 | 100.6 | 2.34 | A |
| Example 19 | 188 | 150 | 11.1 | 15.8 | 104.8 | 8.5 | 1.8 | 100.6 | 2.41 | A |
| Example 20 | 188 | 150 | 11.1 | 41.6 | 110.5 | 8.5 | 4.8 | 100.7 | 3.23 | A |
| Example 21 | 188 | 150 | 7.2 | 40.1 | 112.3 | 7.1 | 4.9 | 100.5 | 3.35 | A |
| Example 22 | 188 | 150 | 7.2 | 40.5 | 94.1 | 7.1 | 1.7 | 100.6 | 2.35 | A |
| Example 23 | 188 | 150 | 10.2 | 13.8 | 109 | 7.6 | 3.1 | 100.7 | 2.78 | A |
| Example 24 | 188 | 150 | 10 | 28.2 | 99.8 | 7.3 | 1.2 | 100.7 | 1.85 | A |
| Example 25 | 188 | 150 | 9.5 | 42.3 | 7.2 | 7.7 | 1.2 | 100.5 | 1.88 | A |
| Example 26 | 188 | 150 | 7.5 | 44.8 | 5.5 | 7.1 | 0.7 | 100.6 | 1.12 | A |
| Example 27 | 188 | 150 | 7.5 | 43.9 | 5.8 | 7.5 | 0.7 | 100.7 | 1.18 | A |
| Example 28 | 188 | 150 | 7.6 | 43.8 | 5.6 | 7.5 | 0.3 | 100.7 | 1.16 | A |
| Example 29 | 188 | 150 | 9.7 | 42.9 | 6.3 | 7.7 | 4.8 | 100.6 | 3.29 | A |

| | Film Thickness ($\mu$m) | Resin Layer (Coating Layer) Thickness (nm) | Coating Solution pH | Glossiness (%) | Depression Density (Number/900 $\mu m^2$) | Surface pH (P) | Number Density of Particles (Number/ $\mu m^2$) | Relative Reflectance (%) | Surface Roughness Rz | Line Contamination |
|---|---|---|---|---|---|---|---|---|---|---|
| Example 30 | 188 | 150 | 7.5 | 29.8 | 31.8 | 7.3 | 3.6 | 100.2 | 2.96 | B |
| Example 31 | 188 | 150 | 7.5 | 30.3 | 28.5 | 7.3 | 3.3 | 100.3 | 2.79 | B |

Table 6

| | Film Thickness (μm) | Resin Layer (Coating Layer) Thickness (nm) | Coating Solution pH | Glossiness (%) | Depression Density (Number/900 μm²) | Surface pH (P) | Number Density of Particles (R) (Number/μm²) | Relative Reflectance (%) | Surface Roughness Rz | Line Contamination |
|---|---|---|---|---|---|---|---|---|---|---|
| Comp. Ex. 1 | 188 | 150 | 7.5 | 48.9 | 2.6 | 7.3 | 0.6 | 100.4 | 1.18 | A |
| Comp. Ex. 2 | 188 | 150 | 7.5 | 60.3 | 0 | 7.3 | 0 | 100.6 | 0.58 | A |
| Comp. Ex. 3 | 188 | 150 | 7.5 | 57.2 | 0 | 7.4 | 0.7 | 100.5 | 0.61 | A |
| Comp. Ex. 4 | 188 | No coating | 7.3 | 72.5 | 0 | 7.1 | 0 | 100.6 | 0.22 | A |
| Comp. Ex. 5 | 635 | 510 | 7.5 | 62 | 0 | 7.2 | 1.2 | 90.1 | 1.28 | A |
| Comp. Ex. 6 | 317 | 260 | 7.5 | 51 | 1.2 | 7.3 | 0.8 | 93.6 | 1.25 | A |
| Comp. Ex. 7 | - | - | - | - | - | - | - | - | - | A |
| Comp. Ex. 8 | 188 | 150 | 7.5 | 52.7 | 0.8 | 7.3 | 0.3 | 100.5 | 0.97 | A |
| Comp. Ex. 9 | 188 | 150 | 7 | 48.3 | 4.8 | 7.0 | 0.8 | 100.6 | 1.15 | A |
| Comp. Ex. 10 | 188 | 150 | 7.7 | 47.1 | 4.2 | 7.0 | 4.9 | 100.5 | 3.41 | A |
| Comp. Ex. 11 | 188 | 150 | 11.3 | 62.8 | 0.8 | 8.6 | 4.8 | 10.6 | 2.78 | A |
| Comp. Ex. 12 | 188 | 150 | 11.4 | 65.3 | 0.9 | 8.7 | 3.2 | 100.7 | 2.32 | A |

EP 2 610 651 A2

28

(continued)

| | Film Thickness (μm) | Resin Layer (Coating Layer) Thickness (nm) | Coating Solution pH | Glossiness (%) | Depression Density (Number/900 μm²) | Surface pH (P) | Number Density of Particles (R) (Number/μm²) | Relative Reflectance (%) | Surface Roughness Rz | Line Contamination |
|---|---|---|---|---|---|---|---|---|---|---|
| Comp. Ex. 13 | 188 | 150 | 11.4 | 81.2 | 1.1 | 8.7 | 1.3 | 100.6 | 0.96 | A |
| Comp. Ex. 14 | 188 | 150 | 11.3 | 85.2 | 1.5 | 8.6 | 0 | 100.7 | 0.62 | A |
| Comp. Ex. 15 | 188 | 150 | 7.5 | 50.2 | 4.5 | 7.4 | 0 | 100.6 | 0.25 | A |
| Comp. Ex. 16 | 188 | 150 | 7.5 | 49.8 | 4.6 | 7.3 | 0.5 | 100.7 | 1.20 | A |
| Comp. Ex. 17 | 188 | 150 | 9.6 | 51.3 | 4.2 | 7.7 | 5.2 | 100.6 | 3.53 | B |
| Comp. Ex. 18 | 188 | 150 | 7.5 | 47.6 | 4.8 | 7.4 | 0.6 | 100.6 | 1.25 | A |
| Comp. Ex. 19 | 188 | 150 | 7.5 | 45.9 | 4.9 | 7.4 | 0.6 | 100.6 | 1.11 | A |
| Comp. Ex. 20 | 188 | 150 | 7.5 | 48.9 | 4.6 | 7.4 | 0.4 | 100.7 | 1.08 | A |
| Comp. Ex. 21 | 188 | 150 | 7.3 | 49.1 | 4.3 | 7.2 | 0.6 | 100.7 | 1.06 | A |

DESCRIPTION OF SYMBOLS

1, 2, 8, 9, 10, 11: Depressions
3, 7, 12, 13, 15, 16: Resin layer
4: Resin layer thickness
5: Threshold line at 30% of resin layer thickness percentage
6: White film
14: Inorganic particles

**Claims**

1. A biaxially-oriented white laminated polyester film having a resin layer on at least one side of a white polyester film, wherein at least five depressions with an area of 1 to 20 $\mu$m$^2$ are present per 900 $\mu$m$^2$ of film surface area on a resin layer-side surface of the biaxially-oriented white laminated polyester film.

2. The biaxially-oriented white laminated polyester film according to claim 1, wherein the surface roughness Rz on the resin layer-side of the biaxially-oriented white laminated polyester film is not less than 1.0 $\mu$m.

3. The biaxially-oriented white laminated polyester film according to claim 1 or 2, wherein the resin layer is formed by using an acrylic binder.

4. The biaxially-oriented white laminated polyester film according to any one of claims 1 to 3, wherein the resin layer contains inorganic particles and (1) to (3) are satisfied:

$$7.1 \leq P \leq 8.5 \quad (1)$$

$$0 \leq R \leq 5 \quad (2)$$

$$R \geq 7.6 - P \quad (3)$$

wherein P is a surface pH of the resin layer, and R is a number density of particles in the resin layer (R) [number/$\mu$m$^2$].

5. The biaxially-oriented white laminated polyester film according to claim 4, excluding the range where the following equations (4) and (5) are simultaneously satisfied:

$$0.3 < R < 0.7 \quad (4)$$

$$7.1 < P < 7.5 \quad (5).$$

6. The biaxially-oriented white laminated polyester film according to any one of claims 1 to 5, which is stretched at least 2-fold or more.

7. The biaxially-oriented white laminated polyester film according to claim 3, wherein the acrylic binder comprises a methylol group or a condensation reactant thereof.

8. The biaxially-oriented white laminated polyester film according to any one of claims 1 to 7, wherein the resin layer contains inorganic particles, the content of the inorganic particles being from 2% by weight to 25% by weight based on the resin layer.

9. The biaxially-oriented white laminated polyester film according to any one of claims 1 to 8, wherein the resin layer thickness is 30 to 200 nm.

10. The biaxially-oriented white laminated polyester film according to any one of claims 1 to 9, wherein the surface glossiness at an incidence angle of 60° is not more than 45%.

11. A process for producing a white laminated film having a resin layer on at least one side of a white film, the resin layer having 5 to 25 depressions with an area of 1 to 20 $\mu m^2$ per 900 $\mu m^2$ of the resin layer, wherein the resin layer is formed by application of a coating solution to at least one side of the white film, followed by stretching in at least one direction and drying.

12. The process for producing a white laminated film according to claim 11, wherein the coating solution comprises an acrylic binder, a lithium salt, and inorganic particles.

13. The process for producing a white laminated film according to claim 11 or 12, wherein the coating solution contains an acrylic binder, the acrylic binder comprising a methylol group or a condensation reactant thereof, and the coating solution having a pH of 9 to 11.2.

14. A white laminated film obtained by the production process according to any one of claims 11 to 13.

Fig.1

**Fig.2**

Fig.3

Fig.4

**Fig.5**

Fig.6

Fig.7

**Fig.8**

Coating Solution pH

**Fig.9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004090523 A